# EUROPÄISCHE PATENTSCHRIFT

(11) **EP 0 965 827 B1**
(45) Veröffentlichungstag und Bekanntmachung des Hinweises auf die Patenterteilung: **03.03.2004**
(21) Anmeldenummer: 99810288.3
(22) Anmeldetag: 08.04.1999
(51) Int. Cl.: G01L 1/16, G01D 18/00, G01D 3/036

(54) **Schaltungsanordnung zur Messung piezoelektrischer Signale mit einer Ruhespannung für den Bereichskondensator**
Circuit for measuring piezoelectric signals with a rest voltage for the range capacitor
Circuit de mesure pour signaux piezoélectriques avec un voltage de repos pour le condensateur de gamme

(30) Priorität: 19.05.1998 CH 109998
(43) Veröffentlichungstag der Anmeldung: 22.12.1999
(73) Patentinhaber: Kistler Holding AG, 8408 Winterthur (CH)
(72) Erfinder: Zanetti, Markus, 8500 Frauenfeld (CH)

(56) Entgegenhaltungen:
- CH-A- 542 434
- US-A- 4 543 536
- US-A- 5 252 928
- US-A- 5 523 642

## Beschreibung

Die Erfindung betrifft eine Schaltungsanordnung gemäss Oberbegriff von Anspruch 1. Eine solche ist bekannt aus dem CH-Patent 542.434. Bei dieser bekannten Anordnung wird die Bereichs- oder Gegenkopplungskapazität beim Reset durch Abschalten der Speisung völlig entladen, so dass vor einem erneuten Einschalten der Speisung für eine erneute Messung an dieser Kapazität keine Spannung anliegt, weshalb dieser Vorgang auch als Nullung bezeichnet wird. Diese Nullung des Bereichskondensators hat den Nachteil, dass Messungen nur in einem einzigen, durch seine Kapazität vorgegebenen Messbereich vorgenommen werden können, wie später noch erläutert wird.

Aufgabe der Erfindung ist es, eine Schaltungsanordnung zu schaffen, bei der der Messbereich, losgelöst von der direkten Bindung an die Kapazität des Bereichskondensators, in gewissen Grenzen einstellbar ist. Gelöst wird diese Aufgabe durch die Merkmale im Anspruch 1.

Durch den Spannungsteiler wird dabei erreicht, dass sich nach dem Einschalten der Speisung, d.h. beim Öffnen des Reset-Kurzschlusses der Zweidrahtleitung, eine von der Wahl des Spannungsteilers abhängige Ausgangsruhespannung aufbaut, deren Grösse den zu erfassenden Messbereich bestimmt. Dieser Spannungsaufbau erfolgt dadurch, dass beim Einschalten der Speisung ein Impuls von definierter Zeitdauer das Schaltelement während dieser definierten Zeitdauer schliesst. Dadurch lädt ein Regelkreis den Bereichskondensator auf eine definierte Spannung auf, wobei als Sollgrösse des Regelkreises die Referenzspannung am einen Eingang des Verstärkers dient, während als Istgrösse die über den Spannungsteiler und das Schaltelement am anderen Eingang des Verstärkers liegende Ausgangsspannung auf die Referenzspannung abgeglichen wird. Nach Ablauf der definierten Zeitdauer ist die Anordnung messbereit.

Ist die Istgrösse bei der vorstehend beschriebenen Regelung zu gross, so muss die Ausgangsspannung erniedrigt werden. Der dabei fliessende Strom wird über die Eingangskomponenten abgeführt, was in diesen zu einer Erwärmung, und damit zu einer verstärkten Drift führt. Um diese Erwärmung so gering wie möglich zu halten, kann man dem Spannungsteiler, der zur Festlegung der Ausgangsruhespannung dient, ein vom Verstärker geregeltes Steuerelement, beispielsweise einen regelbaren Transistor, parallel schalten. Über diesen kann der restliche Speisestrom dann an den Eingangskomponenten vorbei abgeführt werden.

Bekanntlich lässt sich die Zeitkonstante, und damit die untere Grenzfrequenz, der Anordnung durch Wahl eines geeigneten Zeitkonstantenwiderstandes von der Grösse Rg in gewissen Grenzen einstellen, wobei beispielsweise zwischen einem Betrieb mit relativ kurzer Zeitkonstante, der als "short" bezeichnet wird, und einem als "long" bezeichneten Betriebszustand mit längstmöglicher Zeitkonstante umgeschaltet werden kann. Im Short-Betrieb ist die Zeitkonstante - bei gegebener Bereichskapazität Cg - im wesentlichen bestimmt durch die Grösse Rg des Zeitkonstantenwiderstandes, während im Long-Betrieb der Widerstand des offenen Schaltelementes im wesentlichen die Zeitkonstante bestimmt. Ein Ein- bzw. Umschalten auf eine der beiden Betriebsarten kann mit der neuen Schaltungsanordnung erreicht werden, wenn der Impulsgeber zusätzlich eine asymmetrische bistabile Kippstufe steuert, wobei der jeweilige Endzustand der Kippstufe, der durch einen direkten steilen oder einen verzögerten relativ flachen Anstieg des Einschaltimpulses bestimmt ist, die Zeitkonstante der Anordnung definiert, wobei ferner ein Einwegelement, z. Beispiel eine Diode, eine Selbstansteuerung des einen, durch den steilen Anstieg bestimmten Endzustandes der Kippstufe verhindert.

Wird für die Anordnung auch im Short-Betrieb eine relativ lange Zeitkonstante, beispielsweise von grösser 1 sec., gefordert, woraus ein relativ langsamer Reset, d.h. eine relativ langsame Aufladung des Bereichskondensators auf die Ausgangsruhespannung resultiert, so kann für einen schnellen Reset ein weiteres, ebenfalls vom Impulsgeber gesteuertes Schaltelement den Zeitkonstantenwiderstand überbrücken. In welcher Betriebsart die Anordnung betrieben wird, lässt sich erkennen, wenn dem Spannungsteiler, der zur Festlegung der Ausgangsruhespannung dient, ein kurzschliessbarer Widerstand vorgeschaltet ist, dessen Kurzschliessen von der Kippstufe gesteuert ist; durch Zuschalten bzw. Kurzschliessen dieses Widerstandes wird dabei die Ausgangsruhespannung geändert.

Ein Nullpunktversatz infolge eines Driftstromes im Zeitkonstantenwiderstand lässt sich korrigieren, wenn diesem ein Analog-Integrator oder -Komparator parallel geschaltet ist; der Driftstrom fliesst dann nicht mehr durch den Zeitkonstantenwiderstand, sondern wird über den Analog-Integrator oder -Komparator abgeführt.

Bei gegebenem Bereichskondensator lässt sich eine Optimierung des Messbereiches auf die vorgesehene Anwendung erreichen, wenn der Bereichskondensator über einen zweiten Spannungsteiler rückgekoppelt ist, wobei dem Messsignal-Eingang des Verstärkers ein Tiefpass vorgeschaltet ist; der Tiefpass dient dabei dazu, eine durch die Messbereicheinstellung mittels des zweiten Spannungsteilers auftretende Frequenzgangänderung zu kompensieren.

Wird das piezoelektrische Element des Piezomesswandlers von Masse isoliert in das Wandlergehäuse eingebaut und zwischen beide Verstärkereingänge eingesetzt, kann die Drift in der Piezomesswandler/Verstärkerkombination tief gehalten werden, da die Spannung am piezoelektrischen Element klein oder nicht vorhanden ist.

Im folgenden wird die Erfindung anhand von Ausführungsbeispielen erläutert.

Es zeigen
- Fig. 1: ein Prinzipschaltbild der Grundschaltung,
- Fig. 2: eine Schaltungsanordnung, bei der der restliche Speisestrom über ein geregeltes Steuerelement abgeführt wird,
- Fig. 3 und Fig. 4: eine Schaltungsanordnung, bei der eine Zeitkonstantenumschaltung mittels einer bistabilen Kippstufe sowie eine Anzeige der gewählten Betriebsart vorgesehen sind,
- Fig. 5: eine Schaltungsanordnung mit einem zusätzlichen Integrator parallel zum Zeitkonstantenwiderstand,
- Fig. 6: eine Schaltung mit einem zweiten Spannungsteiler für die Messbereicheinstellung und mit einem Tiefpassfilter,
- Fig. 7: eine Parameter-Darstellung, der unter Beibehaltung der Messbereichskapazität, möglichen Messbereiche, wobei der Parameter das Verhältnis des Spannungsteilers zur Einstellung des Messbereiches ist, und
- Fig. 8: die Kompensation eines Arbeitspunktversatzes mit Hilfe eines Integrators.

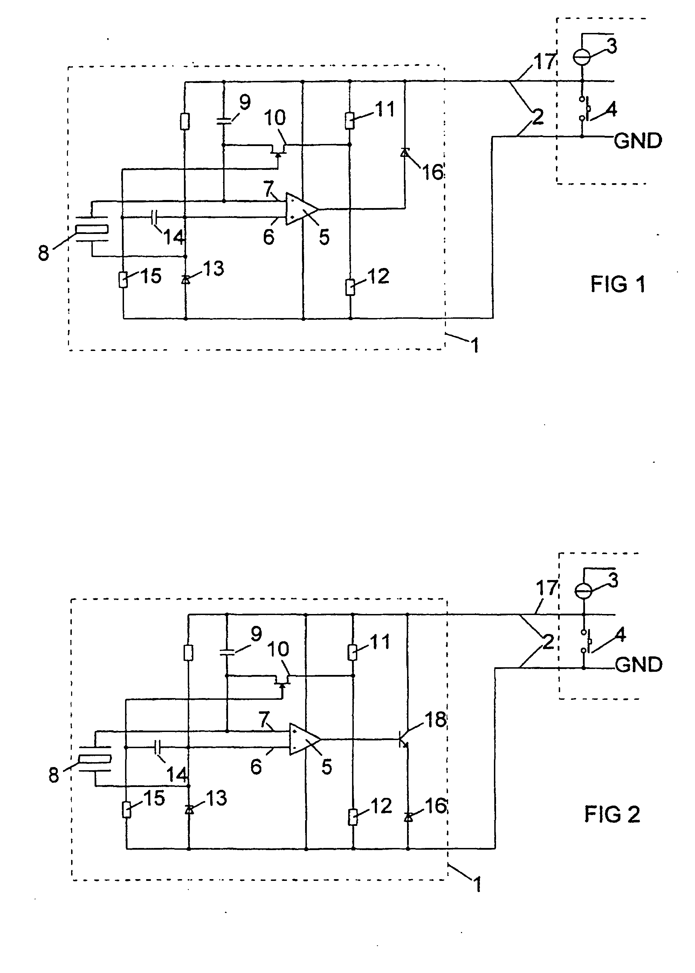

Die Piezomesswandler/Ladungsverstärker-Kombination 1, die in Fig. 1 bis 6 in einem gestrichelten Rahmen dargestellt ist, ist über eine Zweidraht-Leitung 2 mit einer nicht weiter dargestellten Auswerte- und Versorgungseinheit verbunden. In dieser befinden sich eine Konstantstromquelle 3 und ein Kurzschlussschalter 4 für die Zweidrahtleitung 2, der zum Einschalten der Anordnung geöffnet wird.

In bekannter Weise ist der Ausgang des Ladungsverstärkers 5, zwischen dessen beiden Eingängen 6 und 7 das piezoelektrische Messelement 8, z.B. ein Quarzkristall, angeordnet ist, über einen Bereichskondensator 9 mit der Kapazität Cg gegengekoppelt. Der Kondensator 5 wird zur Nullung über ein Schaltelement 10 nicht, wie bekannt, direkt kurzgeschlossen, sondern ist erfindungsgemäss über das Schaltelement 10 und einen Spannungsteiler 11, 12 auf den das Messsignal aufnehmenden Eingang 7 des Verstärkers 5 zurückgeführt. Der andere Eingang 6 des Verstärkers 5 ist durch eine Konstantspannungsquelle 13 auf einer definierten Referenzspannung gehalten.

Das Schaltelement 10, das - wie auch die anderen in der Anmeldung verwendeten Schaltelemente - in bekannter Weise z. Beispiel ein Relais, ein Mikroschalter, ein thermo- oder lichtgesteuerter Schalter oder, wie in den gezeigten Beispielen, ein FET sein kann, wird von einem Impulsgeber mit definierter Abklingzeit, der in den Beispielen ein entsprechend dimensioniertes RC-Glied 14, 15 ist, aber beispielsweise auch eine monostabile Kippstufe sein kann, angesteuert. Weiterhin ist es möglich, was nicht gezeigt ist, der Referenzspannungsquelle 13 einen Spannungsteiler parallel zu schalten und die Referenzspannung für den Verstärkereingang 6 diesem abzunehmen; darüber hinaus kann mit Hilfe einer nicht gezeigten Diode parallel zum Widerstand 15 eine schnellere Entladung des Kondensators 14 bei kurzgeschlossener Zweidrahtleitung 2 erreicht werden.

Schliesslich ist der Verstärkerausgang durch eine weitere Diode 16 vom Ausgang 17 entkoppelt.

Die Funktionsweise der in der Grundschaltung wiedergegebenen Anordnung sei nun kurz beschrieben:

Beim Einschalten der Schaltungsanordnung baut sich an der als Konstantspannungsquelle dienenden Referenzdiode 13 die Referenzspannung auf, die nach dem Kondensator 14 einen Impuls erzeugt, der über den Widerstand 15 abklingt. Dieser Impuls steuert das Schaltelement 10 an, welches einen Regelkreis schliesst. Der Regelkreis hat als Sollgrösse die Referenzspannung am Eingang 6 des Verstärkers 5; die Istgrösse des Regelkreises ist die Spannung am Messsignale aufnehmenden Verstärkereingang 7; die Istgrösse wird aus der Ausgangspannung erzeugt, welche über den Spannungsteiler 11,12 und das durchgesteuerte Schaltelement 10 zurückgeführt wird. In der Zeit, während der das Schaltelement 10 durchgesteuert ist, und die Regelung aktiv ist, wird der Bereichskondensator 9 auf einen definierten Spannungswert geladen.

Ist die Istgrösse bei 7 kleiner als die Sollgrösse bei 6, vergrössert sich die Spannung am Ausgang 17 und damit auch die Istgrösse bei Eingang 7. Ist die Istgrösse bei 7 grösser als die Sollgrösse bei 6, verkleinert sich die Spannung am Ausgang 17 und damit auch die Istgrösse am Eingang 7.

Der Regelvorgang ist abgeschlossen, wenn Istgrösse und Sollgrösse gleich gross sind. Nach Abklingen des Impulses über den Widerstand 15 wird das Schaltelement 10 geöffnet und damit der Regelkreis unterbrochen. Die Anordnung ist nunmehr zur Messung piezoelektrischer Signale bereit.

Fig. 2 unterscheidet sich von Fig. 1 nur dadurch, dass der Ausgang des Verstärkers 5 nicht direkt über die Diode 16 am Ausgang 17 liegt, sondern dass der Verstärker 5 über einen regelbaren Transistor 18 an den Ausgang 17 angeschlossen ist.

Bei zu niedriger Istgrösse des Regelkreises steuert der Verstärker 5 den Transistor 18 so an, dass er sperrt, wodurch sich die Spannung am Ausgang 17 und damit die Istgrösse vergrössert.

Bei zu hoher Istgrösse steuert der Verstärker 5 den Transistor 18 so an, dass dieser leitend wird, wobei er entsprechend der zu hohen Ausgangsspannung bei 17 so geregelt wird, dass ein Teil dieser Spannung durch einen über ihn fliessenden Strom abgebaut wird, wodurch die Ausgangsspannung und damit auch die Istgrösse bei 7 verkleinert wird. Auf diese Weise wird der abfliessende Strom an den Eingangskomponenten vorbeigeführt, wodurch deren Erwärmung verringert wird.

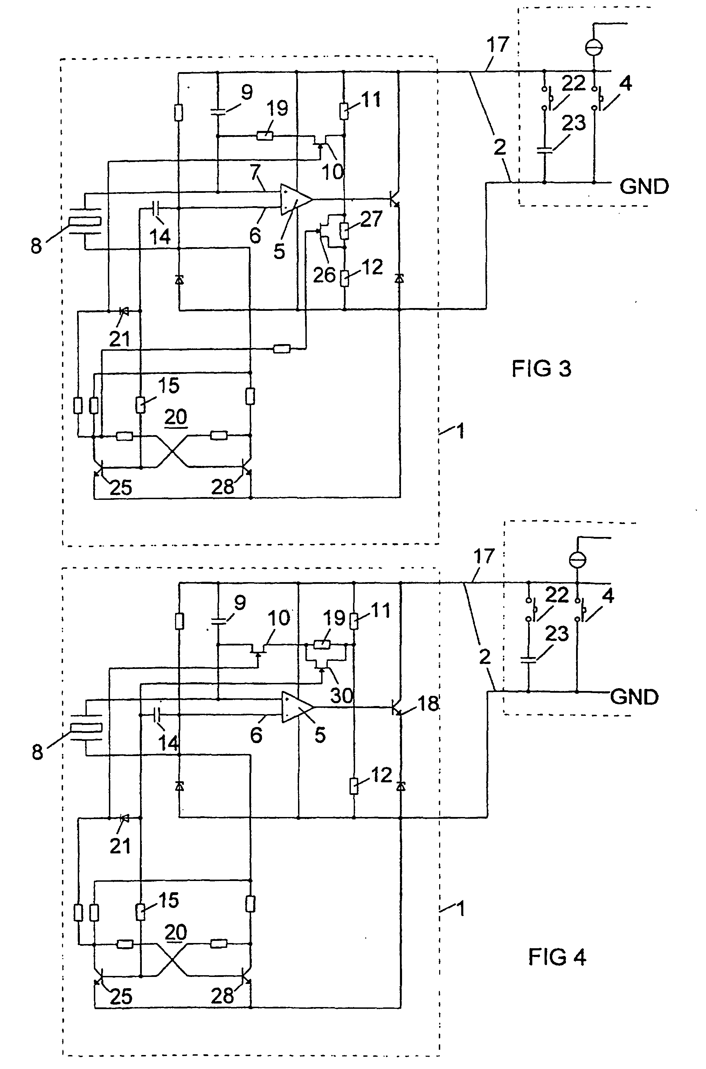

In den Fig. 3 und 4 ist die Anordnung durch einen Zeitkonstantenwiderstand 19 von der Grösse Rg sowie durch eine asymmetrische bistabile Kippstufe 20 erweitert, die ebenfalls von dem Impulsgeber 14, 15 gesteuert wird. Eine Selbstansteuerung der Kippstufe in ihren einen Endzustand wird dabei durch ein Einwegelement, z.Beispiel eine Diode 21, verhindert.

Wie bereits erwähnt, dient die Kippstufe 20 einer Umschaltung zwischen Short- und Longbetrieb, wobei die Zeitkonstante im Shortbetrieb - bei gegebenem Bereichskondensator 9 - im wesentlichen durch die Grösse Rg des Zeitkonstantenwiderstandes 19 bestimmt ist, während die Zeitkonstante des Longbetriebs im wesentlichen durch den Widerstand des offenen Schaltelementes 10 gegeben ist. In welchem Endzustand die Kippstufe 20 sich befindet, ist von der Form des Einschaltimpulses bestimmt. Gelangt der Einschaltimpuls direkt, d.h. mit einer steilen Flanke bei einer - in den Beispielen aus einem Schalter 22 und einem Kondensator 23 bestehenden-inaktiven Verzögerung in der Auswerte- und Speiseeinheit, in die Kippstufe 20, so arbeitet die Anordnung im Longbetrieb. Ein steiler Einschaltimpuls bewirkt dabei über den Impulsgeber 14, 15 einen Impuls auf den Transistor 25 der Kippstufe 20, der dadurch leitend wird und nach Abklingen des Einschaltimpulses die Stellung "offen" am Schaltelement 10 gewährleistet. Gleichzeitig bewirkt der leitende Transistor 25, dass ein Schaltelement 26 (Fig. 3), das einen zusätzlichen Widerstand 27 im Spannungsteiler 11, 12 kurzschliessen kann, offen bleibt, so dass eine für die Betriebsart Long charakteristische Ausgangsruhespannung auftritt.

Erfolgt das Einschalten der Anordnung infolge der aktivierten Verzögerung 22, 23 in der Auswerte- und Speiseeinheit mit langsam ansteigender Flanke, so vermag der vom Impulsgeber 14, 15 ausgesandte Impuls den Transistor 25 nicht in den leitenden Zustand zu versetzen, so dass infolge der Asymmetrie der Kippstufe 20 der Transistor 28 im anderen stabilen Endzustand leitend ist. Dies bewirkt zum einen, dass das Schaltelement 10 auch nach einem Abklingen des Einschaltimpulses leitend bleibt, und zum anderen, dass das Schaltelement 26 den Widerstand 27 kurzschliesst; durch dieses Kurzschliessen stellt sich eine für den Shortbetrieb vorgegebene Ausgangsruhespannung ein. Bei durchgesteuertem Schaltelement 10 ist die Zeitkonstante im wesentlichen durch die Grösse Rg des Zeitkonstantenwiderstandes 19 bestimmt. Wie bereits ausgeführt befindet sich die Anordnung damit im Shortbetrieb.

Bei relativ kleinen Zeitkonstantenwiderständen 19, bei denen Zeitkonstanten bis zu etwa 1 sec. erreicht werden, ist eine durch den Widerstand 19 bestimmte Resetzeit tolerierbar; sie beträgt etwa das 6-fache der Zeitkonstante. Für längere Zeitkonstanten sollte man die Resetzeiten verkürzen, was durch ein weiteres Schaltelement 30, das ebenfalls vom Impulsgeber 14,15 in der gleichen Weise wie das Schaltelement 10 im Long- oder Shortbetrieb gesteuert wird, erfolgen kann. Mit diesem Schaltelement 30 wird der Zeitkonstantenwiderstand 19 während des Resets, d.h. während der Aufladung des Bereichskondensators 9 überbrückt.

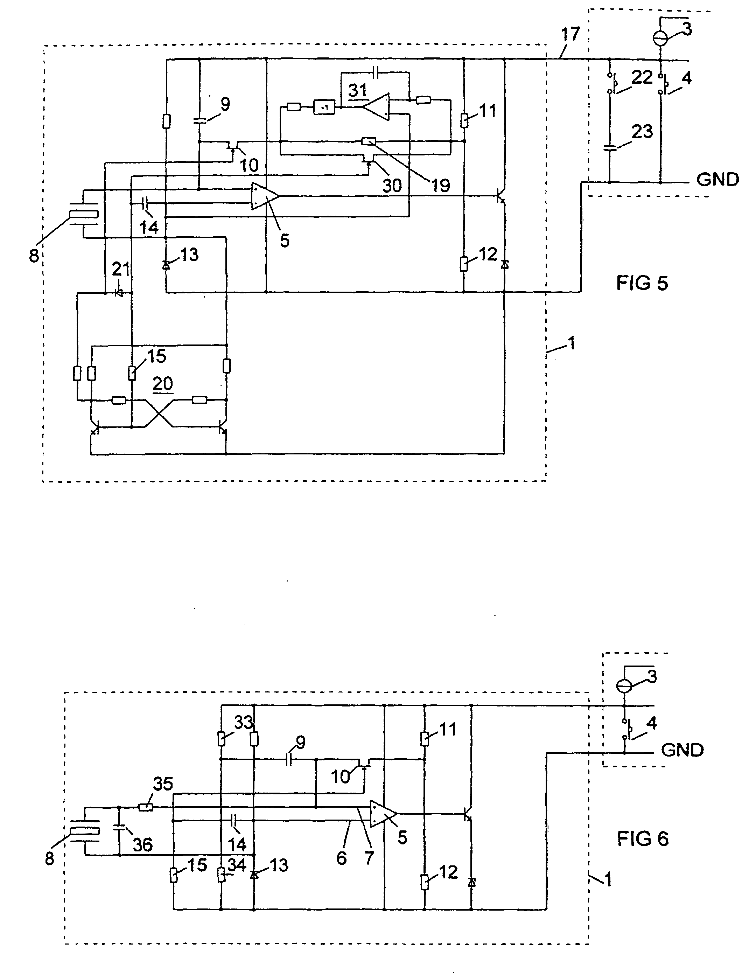

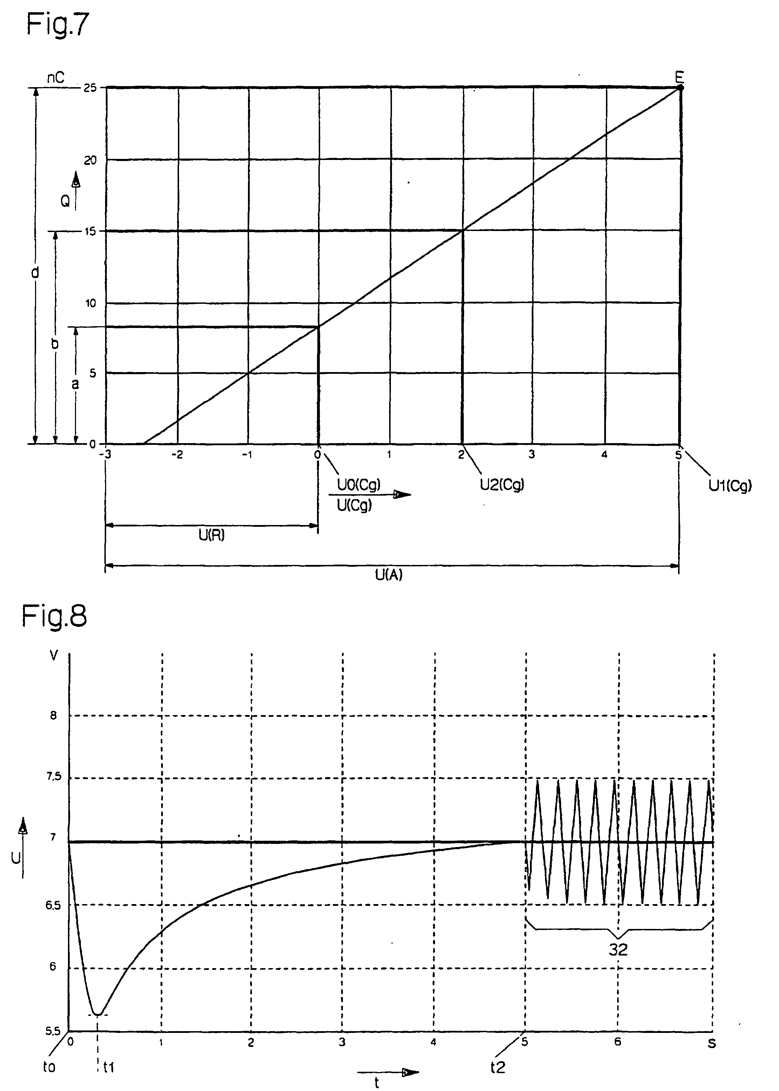

In der in Fig. 5 gezeigten Schaltung ist dem Zeitkonstantenwiderstand 19 ein Analog-Integrator 31 parallel geschaltet. Dieser bewirkt, wie in Fig. 8 gezeigt, eine Driftstromkorrektur, wenn infolge eines Driftstromes, der durch den Zeitkonstantenwiderstand fliesst, am Ausgang des Verstärkers 5 eine Arbeitspunktverschiebung auftritt. In Fig. 8 sind als Abszisse die Zeit in sec. und als Ordinate die Spannung am Ausgang 17 in Volt (V) aufgetragen. Beim Einschalten der Anordnung durch Öffnen des Schalters 4 in der Auswerteeinheit zur Zeit t0 verschiebt sich infolge der erwähnten Drift am Ausgang 17 beispielsweise die Spannung gegen Null, die ihren minimalen Endwert zur Zeit t1 erreicht. Durch den Integrator 31, der auch durch einen Komparator ersetzt sein kann, wird diese Spannung langsam abgebaut, so dass zur Zeit t2, die Arbeitspunktverschiebung ausgeregelt ist und mit der Messung begonnen werden kann. Mit 32 sind in Fig. 8, schematisch angedeutet, Messsignale bezeichnet.

Die Schaltung nach Fig. 6, die der Übersicht wegen gegenüber den vorhergehenden Figuren vereinfacht worden ist, zeigt einen zweiten Spannungsteiler 33, 34 über den der Bereichskondensator 9 rückgekoppelt wird. Dieser Spannungsteiler 33, 34 ermöglicht, je nach Wahl seines Widerstandsverhältnisses, gegenüber dem - durch die Kapazität Cg und durch die vom Spannungsteiler 11, 12 bestimmten-maximalen Messbereich empfindlichere Messbereiche festzulegen, ohne die Kapazität Cg und den Spannungsteiler 11, 12 in ihrem Wert zu verändern. Dadurch kann die Schaltungsanordnung optimal an die zu messende Grösse angepasst werden.

Diese Art der Messbereichseinstellung verursacht eine Frequenzgangänderung. Diese Änderung wird kompensiert durch ein Tiefpassfilter 35, 36 vor diesem Verstärkereingang 7.

Die Wirkung der Erfindung sei nun anhand von Fig. 7 für eine willkürlich vorgegebenen Auslegung der Schaltungskomponenten erläutert, wobei auf der Abszisse die Ruhespannung über dem Bereichskondensator 9 nach Reset in Volt (V) und auf der Ordinate der jeweils zugehörige Ladungs-Messbereich in Nano-Coulomb (nC) angegeben sind. Mit U(Cg) ist die Spannung am Bereichskondensator 9, also dessen Spannung nach Abklingen des Einschaltimpulses unmittelbar vor Messbeginn, aufgetragen. Die Spannung U1(Cg) entspricht im Maximum der Differenz aus der Ausgangsruhespannung U(A) der Anordnung und der Referenzspannung U(R) am Eingang 6 des Verstärkers 5, da ja beide Verstärkereingänge 6 und 7 auf den selben Spannungenswert abgeglichen sind. Der mögliche Gesamtbereich dieser Spannung U(Cg) erstreckt sich über die gesamte Ausgangsruhespannung U(A).

Der maximalen Spannung am Kondensator 9 bei Messbeginn ist ein maximaler Messbereich d für die zu messende Ladung Q zugeordnet, der sich über die ganze Höhe der Ordinate in Fig. 7 erstreckt.

Vom Endpunkt E dieses Messbereiches, also seinem Maximalwert, bei maximaler Spannung U1 (Cg) ergibt sich in der Parameterdarstellung der Fig. 7 der mögliche Messbereich für eine zu messende Ladung Q durch Zuordnung dieser Ladung zum jeweiligen Wert für U(Cg) mit Hilfe der Geraden, die von E aus über den ganzen möglichen Bereich für U(Cg) verläuft, d.h. über die ganze Abszissenstrecke für die Ausgangsruhespannung U(A). Ein für eine bestimmte Aufgabe geeigneter Messbereich für die Ladung Q bzw. die dafür notwendige Spannung U(Cg) kann dabei mit Hilfe des Spannungsteilers 33, 34 ausgewählt werden.

Aus Fig. 7 lässt sich daher ersehen, dass mit einer Anordnung nach dem Stand der Technik, bei der ja zu Messbeginn der Wert U(Cg)= 0, in Fig. 7 mit U0(Cg) bezeichnet, gegeben ist, nur ein einziger Messbereich a genutzt werden kann, während mit der erfindungsgemässen Schaltung bei dem Maximalwert U1(Cg) der gesamte, auf der Ordinate dargestellte Ladungsbereich d erfasst werden kann.

Mit Hilfe des Spannungsteilers 33, 34 ist es darüber hinaus möglich einen beliebigen Zwischenwert U2(Cg), und damit einen verkleinerten möglichen Messbereich b für die Ladung Q auszuwählen. Für die zugrundegelegte Auslegung ermöglicht ein Wert U2(Cg) = 2 Volt beispielsweise einen Messbereich b für die Ladung Q von 15 nC.

## Patentansprüche

1. Schaltungsanordnung zur Messung piezoelektrischer Signale durch eine Piezomesswandler/Ladungsverstärker-Kombination (1), bei der ein Bereichskondensator (9) von einer Reset- oder Nullungseinrichtung überbrückt ist, wobei eine zweipolige Drahtverbindung (2) für die Speisung gleichzeitig der Signalübertragung und der Nullung dient, die ihrerseits von einem durch die von einer Konstantstromquelle (3) erzeugte Speisespannung beeinflussten Schaltelement (10) gesteuert ist, wobei weiterhin ein Eingang (6) des Verstärkers (5) durch eine Konstantspannungsquelle (13) auf einer definierten Referenzspannung [U(R)] gehalten ist, **dadurch gekennzeichnet, dass** die Ausgangsruhespannung [U(A)] der Anordnung über einen Spannungsteiler (11, 12) und das Schaltelement (10) an den anderen, die Messsignale aufnehmenden Eingang (7) des Verstärkers (5) zurückgeführt ist, und dass ferner das Schaltelement (10) über einen Impulsgeber (14, 15) mit definierter Abklingzeit angesteuert ist.

2. Schaltungsanordnung nach Anspruch 1, **dadurch gekennzeichnet, dass** dem Spannungsteiler, der zur Festlegung der Ausgangsruhespannung dient, ein vom Verstärker (5) geregeltes Steuerelement (18) parallel geschaltet ist.

3. Schaltungsanordnung nach Anspruch 1 oder 2, mit einem Zeitkonstantenwiderständ (19) in Verbindung mit dem Bereichskondensator (9), **dadurch gekennzeichnet, dass** der Impulsgeber (14, 15) zusätzlich eine asymmetrische bistable Kippstufe (20) steuert, wobei der jeweilige Endzustand der Kippstufe (20), der durch einen direkten, steilen oder einen verzögerten, relativ flachen Anstieg des Einschaltimpulses bestimmt ist, die Zeitkonstante der Anordnung definiert, wobei ferner ein Einwegelement (21) eine Selbstansteuerung des einen, durch den steilen Anstieg bestimmten Endzustands der Kippstufe (20) verhindert.

4. Schaltungsanordnung nach Anspruch 3, **dadurch gekennzeichnet, dass** dem Spannungsteiler (11, 12), der zur Festlegung der Ausgangsruhespannung dient, ein kurzschliessbarer Widerstand (27) vorgeschaltet ist, dessen Kurzschliessen von der Kippstufe (20) gesteuert ist.

5. Schaltungsanordnung nach Anspruch 3 oder 4, **dadurch gekennzeichnet, dass** ein weiteres, ebenfalls vom Impulsgeber (14, 15) gesteuertes Schaltelement (30) den Zeitkonstantenwiderstand (19) überbrückt.

6. Schaltungsanordnung nach einem der Ansprüche 3 bis 5, **dadurch gekennzeichnet, dass** dem Zeitkonstantenwiderstand (19) ein Analog-Integrator (31) oder -Komparator parallel geschaltet ist.

7. Schaltungsanordnung nach einem der vorgehenden Ansprüche, **dadurch gekennzeichnet, dass** der Bereichskondensator (9) über einen zweiten Spannungsteiler (33, 34) rückgekoppelt ist, wobei dem Messsignal-Eingang (7) des Verstärkers (5) ein Tiefpass (35, 36) vorgeschaltet ist.

8. Schaltungsanordnung nach einem der vorgehenden Ansprüche, **dadurch gekennzeichnet, dass** das piezoelektrische Element des Piezomesswandlers (8) von Masse isoliert in das Wandlergehäuse eingebaut ist.

9. Verfahren zur Erzeugung einer definierten Ausgangsruhespannung [U(A)] für die Piezomesswandler/Ladungsverstärker-Kombination (1) mit Hilfe der Schaltungsanordnung nach einem der vorhergehenden Ansprüche, **dadurch gekennzeichnet, dass** beim Einschalten der Anordnung durch Öffnen des Kurzschlusses (4) der Zweidrahtleitung (2) ein Impuls von definierter Zeitdauer das Schaltelement (10) während der definierten Zeitdauer schliesst, wodurch ein Regelkreis den Bereichskondensator (9) auf eine definierte Spannung auflädt, wobei als Sollgrösse des Regelkreises die Referenzspannung [U(R)] am einen Eingang (6) des Verstärkers (5) dient, und als Istgrösse die über den Spannungsteiler (11, 12) und das Schaltelement (10) am anderen Eingang (7) des Verstärkers (5) liegende Ausgangsspannung auf die Referenzspannung [U(R)] abgeglichen wird.

## Claims

1. A circuit for the measurement of piezoelectric signals by means of a piezotransducer/charge amplifier combination (1) in which a zone capacitor (9) is bypassed by a reset or zeroizing device wherein a bipolar wire connection (2) provides the supply simultaneously of the signal transduction and the reset which themselves are controlled by a control member (10) influenced by the supply voltage generated by a current generator (3), and wherein further one input (6) of the amplifier (5) is maintained at a defined reference voltage [U(R)] by means of a current generator (13) **characterized in that** the starting off-load voltage [U(A)] of the circuit is fed back via a voltage distributor (11, 12) and the control member (10) to the other input (7) of the amplifier (5) receiving the measurement signals, and that further the control member (10) is triggered via an pulse generator (14, 15) having a defined relaxation time.

2. A circuit according to claim 1 **characterized in that** a control member (18) controlled by the amplifier (5) is coupled in parallel to the voltage distributor serving for establishing of the starting off-load voltage.

3. A circuit according to any of the claims 1 or 2 having a time constant resistance (19) in connection with the zone capacitor (9) **characterized in that** the pulse generator (14, 15) additionally controls an asymmetrical bistable flip-flop connection (20) wherein each of the final conditions of the flip-flop connection (20) determined by a direct, steep or a delayed, relatively flat voltage built-up of the closing pulse defines the time constant of the circuit, wherein further a one-way member (21) prevents self-triggering of one of the final conditions of the flip-flop connection (20) which is determined by the steep voltage built-up.

4. A circuit according to claim 3 **characterized in that** in series to the voltage distributor (11, 12) serving for establishing the starting off-load voltage a shortable resistance (27) is coupled the shorting of which is controlled by the flip-flop connection (20).

5. A circuit according to any of the claims 3 or 4 **characterized in that** another control member (30) which is also controlled by pulse generator (14, 15) bypasses the time constant resistance (19).

6. A circuit according to any of the claims 3 to 5 **characterized in that** an analog integrator (31) or comparator is connected in parallel to the time constant resistance (19).

7. A circuit according to any of the preceding claims **characterized in that** the zone capacitor (9) is regenerated via a second voltage distributor (33, 34) wherein a low-pass (35, 36) is connected in series to the measurement signal input (7) of the amplifier (5).

8. A circuit according to any of the preceding claims **characterized in that** the piezoelectric element of the piezotransducer (8) is mounted insulated from earth into the transducer housing.

9. A method for the generation of a defined starting off-load voltage [U(A)] for the piezotransducer/charge amplifier combination (1) by means of the circuit according to any of the preceding claims **characterized in that** upon connecting the circuit by opening the short circuit (4) of the two wire line (2) a pulse which lasts for a defined period of time closes the control member (10) during said defined time period whereby a control circuit charges the zone capacitor (9) up to a defined voltage wherein the reference voltage [U(R)] at the one input (6) of the amplifier (5) serves as a nominal voltage, and the output voltage being present at the other input (7) of the amplifier (5) via the voltage distributor (11, 12) and the control member (10) is adjusted as an actual value with respect to the reference voltage [U(R)].

## Revendications

1. Circuit de mesure de signaux piézoélectriques par une combinaison transformateur de mesure piézoélectrique et amplificateur de charge (1),. dans lequel un condensateur (9) est ponté par un dispositif de remise à l'état initial et de remise à zéro, une liaison filaire bipolaire (2) destinée à l'alimentation servant simultanément à la transmission de signal et à la remise à zéro et étant commandée pour sa part par un élément commutateur (10) influencé par la tension d'alimentation produite par une source de courant constant (3) et une entrée (6) de l'amplificateur (5) étant maintenue par une source de tension constante (13) à une tension de référence définie (U(R)), **caractérisé en ce que** la tension de repos de sortie (U(A)) du circuit est renvoyée par l'intermédiaire d'un diviseur de tension (11, 12) et de l'élément commutateur (10) à l'autre entrée (7), recevant les signaux de mesure, de l'amplificateur (5) et **en ce que** de plus l'élément commutateur (10) est commandé par l'intermédiaire d'un générateur d'impulsions (14, 15) à temps de décroissance défini.

2. Circuit selon la revendication 1, **caractérisé en ce qu'**un élément de commande (18) régulé par l'amplificateur (5) est branché en parallèle avec le diviseur de tension qui sert à fixer la tension de repos de sortie.

3. Circuit selon la revendication 1 ou 2, avec une résistance à constante de temps (19) en liaison avec le condensateur (9), **caractérisé en ce que** le générateur d'impulsions (14, 15) comporte en plus une bascule bistable asymétrique (20), l'état final respectif de la bascule (20) qui est déterminé par une croissance directe, raide ou retardée et relativement plane de l'impulsion de branchement définissant la constante de temps du circuit et un élément unidirectionnel (21) empêchant une commande automatique de l'état final, déterminé par la croissance raide, de la bascule (20).

4. Circuit selon la revendication 3, **caractérisé en ce qu'**une résistance (27) qui peut être court-circuitée et dont le court-circuit est commandé par la bascule (20) est branchée en amont du diviseur de tension (11, 12) qui sert à fixer la tension de repos de sortie.

5. Circuit selon la revendication 3 ou 4, **caractérisé en ce qu'**un autre élément commutateur (30) également commandé par le générateur d'impulsions (14, 15) ponte la résistance à constante de temps (19).

6. Circuit selon l'une des revendications 3 à 5, **caractérisé en ce qu'**un intégrateur analogique (31) ou comparateur analogique est branché en parallèle avec la résistance à constante de temps (19).

7. Circuit selon l'une des revendications précédentes, **caractérisé en ce que** le condensateur (9) est branché en rétroaction par l'intermédiaire d'un deuxième diviseur de tension (33, 34), un filtre passe-bas (35, 36) étant branché en amont de l'entrée de signal de mesure (7) de l'amplificateur (5).

8. Circuit selon l'une des revendications précédentes, **caractérisé en ce que** l'élément piézoélectrique du transformateur de mesure piézoélectrique (8) est encastré dans le boîtier de transformateur de manière à être isolé de la masse.

9. Procédé de mesure d'une tension de repos de sortie définie (U(A)) pour la combinaison transformateur de mesure piézoélectrique et amplificateur de charge (1) à l'aide du circuit selon l'une des revendications précédentes, **caractérisé en ce que**, lors du branchement du circuit par l'ouverture du court-circuit (4) de la ligne bifilaire (2), une impulsion de durée définie ferme l'élément commutateur (10) pendant la durée définie, ce qui fait qu'un circuit de régulation charge le condensateur (9) à une tension définie, la tension de référence (U(R)) à une entrée (6) de l'amplificateur (5) servant de grandeur de consigne du circuit de régulation et la tension de sortie présente via le diviseur de tension (11, 12) et via l'élément commutateur (10) à l'autre entrée (7) de l'amplificateur (5) étant mise comme grandeur réelle à la tension de référence (U(R)).
